19 Europäisches Patentamt

European Patent Office

Office européen des brevets

11 Veröffentlichungsnummer: **0 231 494 B1**

## 12 EUROPÄISCHE PATENTSCHRIFT

45 Veröffentlichungstag der Patentschrift: **10.03.93**

51 Int. Cl.⁵: **G03B 27/73**

21 Anmeldenummer: **86117427.4**

22 Anmeldetag: **15.12.86**

54 **Verfahren und Vorrichtung zur Filterbestimmung in einem fotografischen Vergrösserungs- oder Kopiergerät.**

30 Priorität: **18.12.85 IT 486485**

43 Veröffentlichungstag der Anmeldung:
**12.08.87 Patentblatt 87/33**

45 Bekanntmachung des Hinweises auf die
Patenterteilung:
**10.03.93 Patentblatt 93/10**

84 Benannte Vertragsstaaten:
**AT CH DE FR GB LI**

56 Entgegenhaltungen:
**DE-A- 1 497 923**
**DE-A- 2 505 033**
**DE-A- 2 810 295**
**US-A- 3 819 275**
**US-A- 4 125 330**

73 Patentinhaber: **Durst Phototechnik GmbH**
**Gerbergasse 58**
**I-39100 Bozen(IT)**

72 Erfinder: **Vinatzer, Alex**
**Angerweg 19**
**I-39042 Brixen/Milland(IT)**

**Beschreibung**

Die Erfindung betrifft ein Verfahren und eine Meßvorrichtung zur Filterbestimmung beim Farbkopieren in einem fotografischen Vergrößerungs- oder Kopiergerät mit einer Filtereinrichtung für das Kopierlicht, wobei das die Filter und die zu kopierende Bildvorlage durchscheinende Licht selektiv in den Grundfarben Rot, Grün und Blau gemessen und die Filterung in Abhängigkeit einer vorhandenen Abweichung bezüglich einer Referenzvorlage eingestellt wird.

Bei der Herstellung von Farbabzügen oder Vergrößerungen mit einem fotografischen Vergrößerungsgerät ist es zur Erreichung einer korrekten Farbwiedergabe erforderlich, die Lichtmengen, mit denen die einzelnen Farbschichten des Kopiermaterials belichtet werden, so zu bemessen, daß ein bestimmtes Farbgleichgewicht gewahrt ist.

Gemäß einem üblichen subtraktiven Belichtungsverfahren erfolgt die Belichtung der drei Farbschichten gleichzeitig und mit einheitlicher Belichtungszeit mit entsprechend vorgefiltertem Kopierlicht, um ein festgelegtes Verhältnis zwischen den Farbanteilen herzustellen. Eine solche Anfärbung des ursprünglich im wesentlichen weißen Kopierlichtes wird beispielsweise mit Hilfe subtraktiver Farbfilter erreicht, die einzeln und kontinuierlich in den Strahlengang einführbar sind und je nach Farbe und Einfuhrtiefe die Farbzusammensetzung des Lichtes beeinflussen. Die Belichtungszeit wird in der Regel aufgrund einer Lichtmessung in einer einzigen, einer Farbschicht des Kopiermaterials entsprechenden Farbe ermittelt, während der Farbabgleich durch Filterung in einer oder in beiden der übrigen Grundfarben erfolgt. Im besonderen wird beispielsweise die Belichtungszeit aufgrund der Intensität des Rotanteils ermittelt und werden die Verhältnisse Blau/Rot und Grün/Rot durch Einregeln des Gelb- bzw. Magentafilters der Filtereinrichtung im Vergrößerungsgerät festgelegt.

Um Farbe und Ausmaß der für die einzelnen Bildvorlagen erforderlichen Filterung zu bestimmen, wird jede von diesen vor dem Kopieren hinsichtlich ihrer Farbverteilung ausgemessen. Hierzu werden üblicherweise sogenannte Farbanalyser zu Hilfe genommen, die für eine farbselektive Messung des aus einer Bildvorlage austretenden Kopierlichtes ausgelegt sind und vorab in bezug auf eine Referenzvorlage geeicht werden. Mit ihnen wird eine vorhandene Abweichung in der Farbverteilung zwischen der in Messung befindlichen Vorlage und der Referenzvorlage aufgezeigt, um sie durch entsprechendes Nachführen der Filterung auszugleichen. Auf diese Weise wird für eine Reihe zu kopierender Bildvorlagen das gleiche Farbgleichgewicht hergestellt, das in der Referenzvorlage vorhanden ist.

Die beschriebene Vorgangsweise beruht auf dem sogenannten Prinzip der Grauintegration, in dem davon ausgegangen wird, daß die in einer Bildaufnahme enthaltenen Farben über die gesamte Bildfläche zu neutralem Grau integrieren, da die aufgenommene Bildszene typischerweise die drei Grundfarben in gleichen Anteilen enthält.

Die vollständige Kompensation zu Neutralgrau, das heißt der volle Ausgleich durch die Filterung jeder Abweichung vom Bezugsfarbgleichgewicht führt jedoch zu unbefriedigenden Ergebnissen, wenn eine Vorlage beispielsweise eine starke Farbdominante aufweist, weil sich dann in der Bildkopie ein zur Farbdominante komplementärfarbiger Stich und im Endeffekt eine gegenüber dem Original verfälschte Farbwiedergabe ergibt. Die praktische Erfahrung hat gezeigt, daß die Anzahl zufriedenstellender Bildkopien von korrekt belichteten, aber möglicherweise mit Farbdominanten behafteten Filmnegativen durchschnittlich größer ist, wenn die Kompensation zu Neutralgrau nicht in vollem Ausmaß, sondern mit einem gewissen Grad Unterkorrektur erfolgt. Die Maßnahme der Unterkorrektur ist im übrigen in der gegenwärtigen fotografischen Kopiertechnik weitgehend angewandt und ihre Vorteile sind allgemein anerkannt.

Aus der DE - A 25 05 033 ist ein Farbfilterbestimmungsgerät bekannt, das zwei getrennte Meßkreise zur Bestimmung der Anteile zweier Grundfarben im Verhältnis zum Anteil der dritten umfaßt. Jeder Meßkreis weist zwei Fotowiderstände auf, die in anliegenden Zweigen einer Widerstandsmeßbrücke liegen, wobei von den ingesamt vier Fotowiderständen zwei für eine selbe Grundfarbe sensibilisiert und je einem Meßkreis zugeordnet sind, während die beiden übrigen für jeweils unterschiedliche, von der ersten Grundfarbe verschiedene Grundfarben sensibilisiert sind. Der Abgleichzustand der Meßbrücken wird durch Lichtwaagen angezeigt. Die einzelnen Fotowiderstände erhalten das Meßlicht über gesonderte Lichtkanäle ausgehend vom Kopierlicht eines Kopiergerätes. Zu Abgleichzwecken sind einstellbare Blenden in den Lichtkanälen vorgesehen. Bei der Kalibrierung des Gerätes, wenn sich eine Referenzvorlage mit typischer Farbverteilung in der Bildbühne des Kopiergerätes befindet, werden die Blenden so eingestellt, daß beide Meßbrücken im Abgleich sind. Wird anschließend die Referenzvorlage durch eine zu kopierende Farbvorlage vertauscht und kommen dabei die Meßbrücken aus dem Gleichgewicht, wird dieses durch Nachführen der Filterung des Kopierlichtes wieder hergestellt.

Aus der U.S. Patentschrift 4,125,330 ist ein Lichtmeßgerät zur Verwendung als Farbanalyser bekannt, welches nur einen fotoelektrischen Wandler aufweist, der durch einzeln vorschaltbare Farbfilter wahlweise für eine der Grundfarben Rot, Grün oder Blau sensibilisierbar ist. Die Meßvorrichtung umfaßt eine Speichervorrichtung zur wahlweisen Speicherung eines Farbsignals und eine Differenzschaltung zum Vergleich des gespeicherten Farbsignals mit einem anschließend in einer anderen Grundfarbe ermittelten Meßsignal. Dadurch ergibt sich die Möglichkeit, bei aufeinanderfolgender Messung der drei Farbanteile zwei davon im Verhältnis zum dritten zu bestimmen.

Schließlich ist aus der U.S. Patentschrift 3,819,275 ein Gerät zur Filterbestimmung bekannt, das drei in den Grundfarben Rot, Grün und Blau sensibilisierte Fotoelemente aufweist, die gleichzeitig lichtstärkeabhängige Meßsignale für alle drei Farbkomponenten erzeugen. Aus den Meßsignalen wird in einer Recheneinheit das Verhältnis der Anteile von zwei Grundfarben zum Anteil der dritten Grundfarbe ermittelt. Schließlich werden die ermittelten Verhältniswerte mit Referenzwerten aus einer Referenzspannungsquelle verglichen und eventuelle Abweichungen auf einer Anzeigevorrichtung angezeigt.

Die aus den genannten Druckschriften bekannten Meßvorrichtungen zur Filterbestimmung und andere bekannte gattungsgleiche Vorrichtungen liefern keine Meßanzeige, aus der die Filterung unter Beibehaltung eines definierten Grades Unterkorrektur bestimmbar wäre. Sie zeigen lediglich eine vorhandene Abweichung im Verhältnis der Farbanteile zwischen dem aus der jeweiligen Bildvorlage und dem bei Eicheinstellung der Filterung aus der Referenzvorlage austretenden Kopierlicht an und geben damit den Hinweis für ein Nachführen der Filterung bis zum Ausgleich der Abweichung im Sinne der Wiederherstellung des der Referenzvorlage eigenen Farbgleichgewichts. Dies kommt einer vollständigen Kompensation jeder Abweichung vom Bezugsfarbgleichgewicht gleich.

Die Aufgabe der Erfindung besteht darin, ein Verfahren und eine Vorrichtung der eingangs genannten Art anzugeben, mit welchen die Filterbestimmung in einem fotografischen Farbvergrößerungs- oder Kopiergerät auf einfache Weise derart bestimmbar ist, daß eine definierte Farbunterkorrektur in der Farbbelichtung erreicht wird.

Das erfindungsgemäße Verfahren und die Vorrichtung, die diese Aufgabe lösen, Weisen die im kennzeichnenden Teil der Ansprüche 1 und 5 angeführten Merkmale auf.

Die Messung unter Ausschluß der Farbfilter aus dem Kopierstrahlengang liefert als Messung bei von der Filterung unabhängigem und somit gleichbleibendem Meßlicht die tatsächliche Farbdichteabweichung einer zu kopierenden Bildvorlage gegenüber der Referenzvorlage, was den Ausgleich auch nur eines Teils dieser Abweichung durch Filterung und damit die Beibehaltung einer vorbestimmbaren Farbunterkorrektur erlaubt. Dies wird erreicht, indem die Meßwerte aus der Messung bei ungefiltertem Licht gespeichert und mit den in der darauffolgenden Filtereinstellphase laufend ermittelten Meßwerten derart kombiniert werden, daß sich im kombinierten Meßsignal ein vorbestimmtes Verhältnis zwischen Dichteabweichung der Vorlage und zugehöriger Filteränderung ergibt.

Vorteilhafterweise erfolgt die Kombination der Meßsignale aus den Meßphasen bei ungefiltertem und bei von der Filterung bei deren Einstellen beeinflußtem Meßlicht bezüglich eines Meßsignals, welches das Verhältnis zweier Farbanteile zueinander ausdrückt, beispielsweise bezüglich des Verhältnisses Blau/Rot und des Verhältnisses Grün/Rot des Meßlichts. Auf diese Weise werden in der Messung nur Änderungen im gegenseitigen Verhältnis der Farbanteile berücksichtigt, während eine Änderung der Gesamtdichte, das heißt eine verhältnismäßige Änderung aller Farbkomponenten keine Wirkung auf die Meßanzeige hat.

Die kombinierten Meßsignale bezüglich eines jeden Farbverhältnisses werden vorzugsweise in gesonderten Meßkanälen aufbereitet und in jeweiligen Anzeigeeinrichtungen gleichzeitig sichtbar angezeigt. Dadurch wird die Wirkung der Filtereinstellung direkt beobachtbar, ohne daß ein Umschalten zwischen einzelnen Farben notwendig ist.

Moderne fotografische Vergrößerungsgeräte sind zumeist mit einem gemeinhin als "Weißlichthebel" bezeichneten Einstellorgan ausgestattet, mittels welchem die Filter bei Bedarf gemeinsam aus dem Strahlengang herausführbar und anschliessend wieder in die vorhin innerhalb des Lichtbündels eingenommene Stellung zurückführbar sind. Mit einer derartigen Bedienungseinrichtung ist es einfach, die Meßbedingungen in den beiden Phasen der Messung herzustellen. Die erfindungsgemäße Meßeinrichtung ist vorteilhafterweise mit einer Signallampe versehen, die die erfolgte Speicherung der Meßwerte aus der ersten Phase anzeigt und die Freimeldung für die nächste Phase gibt.

Weitere Merkmale und Vorteile des vorgeschlagenen Verfahrens und der Vorrichtung zu dessen Durchführung ergeben sich aus den abhängigen Ansprüchen in Verbindung mit der Beschreibung eines bevorzugten Ausführungsbeispiels, das im folgenden anhand der beigefügten Zeichnungen erläutert wird. Diese zeigen:

Figur 1    eine perspektivische Gesamtansicht der Meßvorrichtung;

Figur 2    ein Prinzipschaltbild der Meßschaltung der Vorrichtung nach Fig. 1.

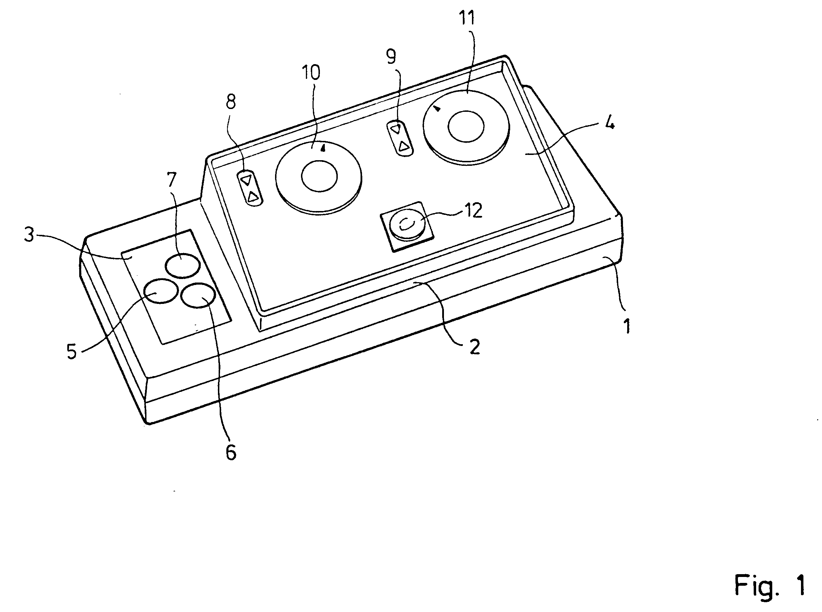

Figur 1 zeigt eine bevorzugte Ausführungsform der erfindungsgemäßen Vorrichtung. Diese umfaßt ein flaches Gehäuse 1, das die hauptsächlichen Teile der Meßschaltung umschließt und dessen obere Deckfläche 2 sich in ein Lichteinfallfeld 3 und ein Anzeige- und Bedienungsfeld 4 teilt. Im einzelnen weist das Lichteinfallfeld 3 drei Lichtöffnungen 5, 6 und 7 auf, im Bereich welcher im Innern des Gehäuses jeweils rot-, grün- und blausensibilisierte fotoelektrische Wandler angeordnet sind. Das Feld 4 weist eine (vorzugsweise leuchtende) Anzeigeeinrichtung 8, 9, Einstellregler 10,11 sowie Bedienungselemente 12, beispielsweise Ein-Ausschalter und/oder Startschalter zum Auslösen eines Meßzyklus auf. In der in Figur 1 dargestellten Ausführungsform ist die Meßvorrichtung für Lichtmessungen in der Projektionsebene eines Vergrößerungsgerätes ausgelegt. Es können jedoch auch andere Meßstellungen in Betracht gezogen werden. Bei entsprechender Anpassung der Gehäuseform und eventueller Anbringung geeigneter Befestigungsmittel kann die Meßvorrichtung beispielsweise unmittelbar unterhalb des Objektivs des Vergrößerungsgerätes angebracht werden.

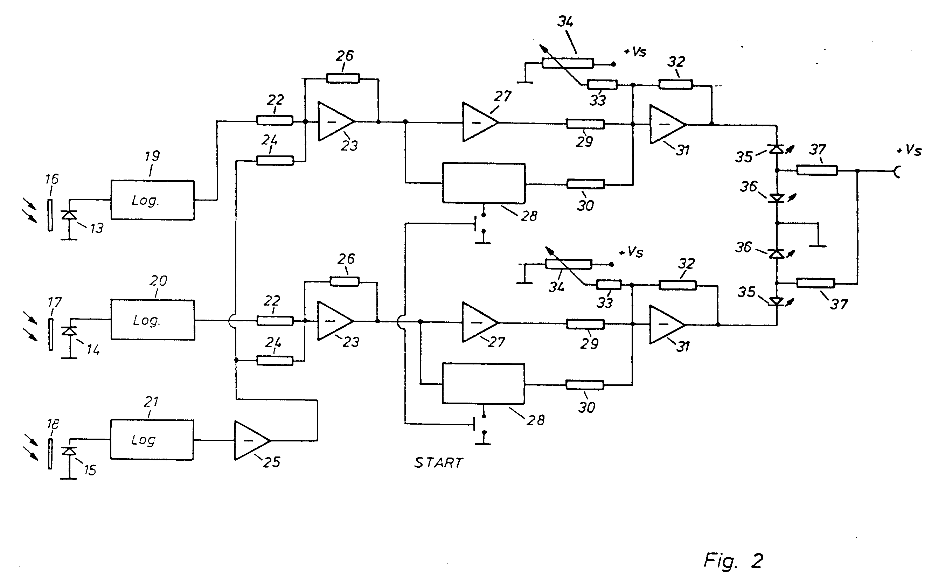

Figur 2 zeigt das Prinzipschaltbild der Meßschaltung. Die Messung geht von der Bestimmung des gegenseitigen Verhältnisses der Farbanteile des Kopierlichtes, oder, genauer, des Verhältisses der Anteile von zwei Farbkomponenten zum Anteil der dritten in bezug auf welche die einheitliche Belichtungszeit bestimmt wird, aus. Die Schaltung weist drei fotoelektrische Wandler, beispielsweise Fotodioden 13, 14 und 15 auf, die jeweils mittels Farbfilter 16, 17 und 18 in den Farben Blau, Grün und Rot sensibilisiert sind und den Lichteinfallöffnungen 5, 6 und 7 des Gehäuses 1 gegenüberliegen. Den Fotodioden schließen sich Signalverstärker 19, 20 und 21 mit logarithmischer Übertragungsfunktion an, so daß am Ausgang eines jeden Verstärkers eine dem Logarithmus des Fotostroms der betreffenden Fotodiode proportionale Spannung ansteht. Die Ausgangssignale der Verstärker 19 und 20 bezüglich der blauen und grünen Farbkomponente sind je über einen Widerstand 22 dem invertierenden Eingang eines Rechenverstärkers 23 zugeführt. An denselben Eingang ist über einen Widerstand 24 und nach Umkehr der Polarität in einem zwischengeschalteten Umkehrverstärker 25 auch das Ausgangssignal des Verstärkers 21 bezüglich der roten Farbkomponente gelegt. Zwischen dem invertierenden Eingang und dem Ausgang eines jeden Verstärkers 23 liegt ein Widerstand 26, so daß jeder Verstärker als Signaladdierer geschaltet ist und am jeweiligen Ausgang, infolge der erwähnten Polaritätsumkehr, die Differenz der beiden Signale am Eingang entsteht. Aufgrund der vorausgegangenen logarithmischen Konversion stellt jedes dieser Differenzsignale das Verhältnis zwischen zwei Farbanteilen, d.h. im vorliegenden Fall, das Verhältnis Blau/Rot bzw. Grün/Rot des Meßlichtes dar. Der Ausgang eines jeden Verstärkers 23 ist mit einem Umkehrverstärker 27 und einer Speichereinrichtung 28 verbunden; der Ausgang des Umkehrverstärkers und jener der Speichervorrichtung sind über je einen Widerstand 29, 30 mit dem invertierenden Eingang eines Rechenverstärkers 31 verbunden, welcher außerdem einen Widerstand 32 zwischen Eingang und Ausgang aufweist und ebenfalls als Signaladdierer geschaltet ist.

Dem Eingangssignal des Rechenverstärkers 31 ist eine veränderliche Spannung überlagert, die an einem zwischen Masse und einem fixen Potential +V liegenden Potentiometer 34 abgegriffen und über einen Widerstand 33 an den Verstärkereingang geführt wird. Der Bereich der am Potentiometer 24 abgreifbaren Spannung erfaßt die Spannweite der Signale am Ausgang des Umkehrverstärkers 27 und am Ausgang der Speichervorrichtung 28, so daß für jeden auftretenden Wert dieser Signale das Ausgangssignal des Addierers, dem der Rechenverstärker 31 angehört, mit dem Potentiometer 34 auf Null einstellbar ist. Der Ausgang eines jeden Addierers ist an zwei in Reihe geschaltete Leuchtdioden 35 und 36 angeschlossen, von denen die zweite an Masse liegt und der gemeinsame Anschlußpunkt über einen Widerstand 37 aus einer Spannungsquelle +$V_s$ gespeist wird. Je nach Ausschlag des Signals am Addiererausgang in die eine oder andere Richtung wird die eine oder die andere der Dioden 35, 36 stromführend, während in einem Zustand des Gleichgewichts die beiden Dioden gleichzeitig Strom führen bzw. aufleuchten. Die Leuchtdioden 35 und 36, die Teil der Anzeigeeinrichtung 8, 9 (Fig.1) sind, liefern also eine sichtbare Anzeige für jede Abweichung des Meßsignals von einem mittels der Potentiometer 34 in bezug auf einen vorgegebenen Eichzustand einstellbaren Vergleichssignal.

Das erfindungsgemäße Verfahren sieht eine erste Messung der Bildvorlage bei ungefiltertem Licht, d.h. bei aus dem Strahlengang ausgeschwankten Farbfiltern im Farbkopf des Vergrößerungsgerätes vor und die Speicherung der Meßwerte aus dieser Phase und deren Kombination mit den Meßwerten, die sich von der gleichen Vorlage in einer folgenden Meßphase, in der die einzelnen Filter in Wirkstellung bewegt werden, ergeben. Die Filterung wird für die einzelnen zu kopierenden Bildvorlagen jeweils so eingestellt, daß sich für jede Vorlage ein gleichbleibender Wert für das aus der Kombination resultierende Meßsignal einstellt.

Die Kombination erfolgt in der Addierschaltung 29-33 in bezug auf die Ausgangssignale des Eichpotentiometers 34 ($U_{oPot}$), des Umkehrverstärkers 27 ($U_{o27}$) und der Speichervorrichtung 28 ($U_{o28}$), die sich, beispielsweise auf den Blaukanal bezogen, folgendermaßen ausdrücken:

$$U_{oPot} = U_{CAL}$$
$$U_{o27} = \log B_F - \log R_F$$

$$U_{o28} = -(\log B_W - \log R_W) \qquad (1)$$

mit

$B_W, R_W$      Signale aus der blau- bzw. rotsensibilisierten Fotodiode in der Meßphase mit ungefiltertem Licht;

$B_F, R_F$      Signale aus denselben Fotodioden bei eingeregelter Filterung und

$U_{CAL}$      Spannung am Abgriff des Eichpotentiometers.

Setzt man der einfacheren Schreibweise halber

$$\log B_F - \log R_F = U_F$$
$$-(\log B_W - \log R_W) = -U_W \qquad (2)$$

ergibt sich das Summensignal ($U_{o31}$) am Ausgang der Summenschaltung 29-33 aus der bekannten Formel für die Ausgangsspannung eines als Addierer geschalteten Rechenverstärkers

$$U_{o31} = -\frac{R}{R_1} U_F + \frac{R}{R_2} U_W - \frac{R}{R_3} U_{CAL} \qquad (3)$$

wobei $R_1$, $R_2$, $R_3$ die Widerstandswerte der den einzelnen Signalen zugeordneten Widerstände 29, 30 und 33 und R der Widerstandswert des Rückkopplungswiderstandes 32 sind.

Im praktischen Betrieb wird eine Eichung der Vorrichtung bezüglich einer ausgewählten Referenzvorlage und jener vorab durch Probenerstellung bestimmten Filterung, die eine farblich zufriedenstellende Kopie der Referenzvorlage erbringt, vorgenommen, wobei mit dem Potentiometer 34 das Signal am Ausgang des Addierers auf einen Bezugswert, vorzugsweise auf Null eingestellt wird, Im Eichzustand gilt somit für (3):

$$-\frac{R}{R_1} U_F + \frac{R}{R_2} U_W - \frac{R}{R_3} U_{CAL} = 0 \qquad (4)$$

und die Meßwerte anschließend auszumessender Bildvorlagen werden als Abweichung vom Bezugswert angezeigt. Gemäß dem erfindungsgemäßen Verfahren wird die Filterung für jede zu kopierende Vorlage so eingeregelt, daß Gleichung (4) erfüllt ist, das heißt bis die Nullanzeige wieder hergestellt ist. Bei ausgeführter Filtereinstellung gilt also:

$$-\frac{R}{R_1} \Delta U_F + \frac{R}{R_2} \Delta U_W = 0 \qquad (5)$$

wobei $\Delta U_W$ weil aus Messungen bei ungefiltertem Licht resultierend die effektive Dichtedifferenz zwischen Referenzvorlage und der in Messung befindlichen Vorlage ausdrückt und $\Delta U_F$ sich aus einem ebenfalls auf die Dichtedifferenz der Vorlage zurückgehenden und daher mit $\Delta U_W$ identischen Teil $\Delta U_N$ und einem weiteren Teil $\Delta U_S$ zusammensetzt, der seinen Ursprung in der Veränderung des Kopierlichtes infolge der Filterung hat. Es ergibt sich also

$$\Delta U_F = \Delta U_N + \Delta U_S \text{ mit } \Delta U_N = \Delta U_W$$

oder

$$\Delta U_F = \Delta U_W + \Delta U_S \qquad (6)$$

Setzt man (6) in (5) ein, ergibt sich

5

$$- \frac{R}{R_1} (\Delta U_W + \Delta U_S) + \frac{R}{R_2} \Delta U_W = 0 \qquad\qquad (7)$$

und schließlich

$$\Delta U_S = -(1 - \frac{R_1}{R_2}) \Delta U_W \qquad\qquad (8)$$

Gleichung (8) ist in bezug auf den Blaukanal oder, genauer, auf das Verhältnis Blau/Rot des Meßlichtes hergeleitet. Es ist jedoch ohne weiteres verständlich, daß bei entsprechender Anpassung der Bezeichnungen ein analoger Ausdruck für den Grünkanal bzw. das Verhältnis Grün/Rot gilt.

Gleichung (8) ist in dem Sinne zu interpretieren, daß einer Dichteänderung $\Delta D = \Delta U_W$ der gemessenen Vorlage gegenüber der Referenzvorlage in einer der Farben eine Änderung der Filterung in der gleichen Farbe gegenübersteht, die dem Wert $-(1-R_1/R_2)\Delta D$ entspricht. Dies bedeutet, daß die Filterung mit Farbunterkorrektur erfolgt, da die Farbdichteunterschiede in den Vorlagen nur zu einem Teil durch die Korrekturfilterung ausgeglichen werden. In einer vorteilhaften Ausbildung der Meßvorrichtung ist das Verhältnis $R_1/R_2$ einstellbar und der Unterkorrekturgrad folglich von der Bedienungsperson wählbar. Für $R_1/R_2 = {}^1\!/2$ ergibt sich eine 50%ige Unterkorrektur.

Die Anwendung der erfindungsgemäßen Meßvorrichtung ist im wesentlichen dieslbe, wie sie von herkömmlichen Filterbestimmungsgeräten bekannt ist, mit der Ausnahme, daß jede Messung auch eine Meßphase bei ungefiltertem Meßlicht umfaßt. In einem vorausgehenden Kalibriervorgang wird die Meßvorrichtung auf eine Referenzvorlage geeicht. Hierzu wird diese in die Bildbühne des Vergrößerungsgerätes eingelegt und werden die Farbfilter des Farbkopfes zunächst aus dem Strahlengang des Kopierlichtes genommen, um über das weiße Licht der Lichtquelle zu verfügen. Mit der Meßsonde in Meßstellung in der Projektionsebene wird durch Betätigen einer hierfür vorgesehenen Taste "START" unter den Bedingungselementen 12 ein Meßzyklus ausgelöst, wobei die in dieser Meßphase bei Weißlicht ermittelten Meßwerte in der Speichervorrichtung gespeichert werden; eine Signallampe zeigt das Ende dieser Meßphase an. Anschließend wird die Filterung auf die vorab durch Probenerstellung bestimmten Werte, die eine optimale Wiedergabe der Referenzvorlage erbringen, eingestellt und werden die Eichpotentiometer 34 bis zum gleichzeitigen Aufleuchten der Leuchtdioden eines jeden Meßkanals nachgeregelt. Damit ist die Eichung der Vorrichtung abgeschlossen. Beim Ausmessen einer Vorlage zum Zwecke der Filterbestimmung für eine farbrichtige Wiedergabe wird derselbe Meßvorgang wiederholt mit dem Unterschied, daß der durch das gleichzeitige Aufleuchten der Leuchtdioden angezeigte Gleichgewichtszustand nun durch Nachregeln der Filter im Farbkopf aufgesucht wird. Nach Einlegen der auszumessenden Vorlage in die Bildbühne und Positionieren der Meßsonde in der Projektionsebene werden also zuerst die Filter ausgeschwenkt und wird dann durch Betätigen der Taste "START" die Meßphase bei Weißlicht ausgelöst. Sobald von der dafür vorgesehenen Signallampe das Ende dieser Phase signalisiert wird, werden das Gelb- und das Magentafilter im Farbkopf bis zum gleichzeitigen Aufleuchten der Leuchtdioden eines jeden Meßkanals eingeregelt. Die so gefundene Filterung ergibt für die Bildkopie eine Farbunterkorrektur entsprechend dem eingestellten Korrekturgrad.

**Patentansprüche**

1. Verfahren zur Filterbestimmung beim Farbkopieren in einem fotografischen Vergrößerungs- oder Kopiergerät mit einer Filtereinrichtung zur Farbfilterung des Kopierlichts, wobei die von den Farbfiltern und einer zu kopierenden Bildvorlage ausgehende Kopierlichtintensität selektiv in den Grundfarben Rot, Grün und Blau gemessen und die Filterung in Abhängigkeit einer vorhandenen Abweichung bezüglich einer Referenzvorlage eingestellt wird, dadurch gekennzeichnet, daß die Vorlage in einer ersten Meßphase mit ungefiltertem Licht der Kopierlichtquelle durchleuchtet wird und die ermittelten Meßwerte gespeichert werden; daß in einer weiteren Meßphase, während welcher Farbfilter in die Wirkstellung bewegt werden, die laufenden Meßsignale gesondert nach Farbe um einen vorgegebenen Bruchteil der entsprechenden, vorher gespeicherten Werte vermindert werden und das jeweilige Farbfilter nachgestellt wird, bis das verminderte Meßsignal einen in bezug auf die Referenzvorlage und die derselben

EP 0 231 494 B1

angepaßte Filterung bestimmten Bezugswert annimmt.

2. Verfahren nach Anspruch 1, dadurch gekennzeichnet, daß verminderte Meßsignale hinsichtlich der Verhältnisse einzelner Farbanteile zueinander gebildet werden.

3. Verfahren nach Anspruch 2, dadurch gekennzeichnet, daß verminderte Meßsignale hinsichtlich der Verhältnisse Blau/Rot und Grün/Rot der Farbanteile im Meßlicht gebildet und in getrennten Anzeigeeinrichtungen sichtbar angezeigt werden.

4. Verfahren nach Anspruch 3, dadurch gekennzeichnet, daß die verminderten Meßsignale in den Anzeigeeinrichtungen als Abweichung von den entsprechenden Meßwerten bezüglich einer Eichbedingung angezeigt werden.

5. Meßvorrichtung zur Durchführung des Verfahrens nach den Ansprüchen 1 bis 4, umfassend mehrere lichtelektrische Wandler (13, 14, 15), von denen jeder in einer der Grundfarben Rot, Grün und Blau sensibilisiert ist, gekennzeichnet durch eine Speichervorrichtung (28) zum Speichern von Meßwerten entsprechend den Meßbedingungen in der ersten Meßphase, eine Kombinationsschaltung (29 bis 32) zum Kombinieren der gespeicherten Meßwerte mit dem Meßsignal entsprechend den Meßbedingungen in der weiteren Meßphase zur Bildung eines um einen vorgegebenen Bruchteil der gespeicherten Werte verminderten Meßsignals und eine Anzeigeeinrichtung (35, 36, 37) zum sichtbaren Anzeigen des verminderten Meßsignals.

6. Vorrichtung nach Anspruch 5, dadurch gekennzeichnet, daß sie zwei getrennte Meßkanäle zur Bestimmung des Verhältnisses der Anteile von zwei Grundfarben zum Anteil der dritten Grundfarbe aufweist und daß jeder Meßkanal eine Speichervorrichtung (28), eine Kombinationsschaltung (29 bis 32) und eine Anzeigeeeinrichtung (35, 36, 37) für das verminderte Meßsignal umfaßt.

7. Vorrichtung nach Anspruch 6, dadurch gekennzeichnet, daß das Meßsignal, welches das Verhältnis zwischen zwei Farbanteilen ausdrückt, der Kombinationsschaltung (29 bis 32) über zwei getrennte Signalwege zugeführt wird, von denen einer die Speichervorrichtung (28) enthält.

8. Vorrichtung nach Anspruch 7, dadurch gekennzeichnet, daß die Kombinationsschaltung (29 bis 32) ein Signaladdierer ist, der einen Rechenverstärker mit unterschiedlichen Verstärkerungsfaktoren für die einzelnen zu addierenden Signale aufweist.

9. Vorrichtung nach Anspruch 8, dadurch gekennzeichnet, daß der Verstärkerungsfaktor für wenigstens eines der zu addierenden Signale einstellbar ist.

**Claims**

1. A method for filter determination during colour copying in a photographic enlarging or copying apparatus having a filtering device for the colour filtering of the copying light, the intensity of the copying light coming from the colour filters and from an image master to be copied being measured selectively in the primary colours red, green and blue and the filtering being adjusted in dependence on any deviation present relative to a reference master, characterized in that the master is illuminated in a first measuring phase with unfiltered light of the copying light source and the measured values ascertained are stored; in a further measuring phase, during which colour filters are moved into the operative position, the current measuring signals are reduced separately according to colour by a predetermined fraction of the corresponding previously stored values and the particular colour filter is adjusted until the reduced measuring signal assumes a reference value determined from the reference master and the filtering matched to the same.

2. A method according to claim 1, characterized in that reduced measuring signals are formed from the ratios of individual colour components to one another.

3. A method according to claim 2, characterized in that reduced measuring signals from the blue/red and green/red ratios of the colour components are formed in the measuring light and are indicated visually in separate indicating devices.

7

**4.** A method according to claim 3, characterized in that the reduced measuring signals are indicated in the indicating devices as a deviation from the corresponding measured values relating to a calibration condition.

**5.** A measuring apparatus for implementing the method according to claims 1 to 4, comprising several photoelectric transducers (13, 14, 15) of which each is sensitized in one of the primary colours red, green and blue, characterized by a memory device (28) for storing measured values corresponding to the measurement conditions in the first measuring phase, a combination circuit (29 to 32) for combining the stored measured values with the measuring signal corresponding to the measurement conditions in the further measuring phase in order to form a measuring signal reduced by a predetermined fraction of the stored values, and by an indicating device (35, 36, 37) for indicating the reduced measuring signal visually.

**6.** An apparatus according to claim 5, characterized in that it includes two separate measuring channels for determining the ratios of the components of two primary colours to the component of the third primary colour, and each measuring channel includes a memory device (28), a combination circuit (29 to 32) and an indicating device (35, 36, 37) for the reduced measuring signal.

**7.** An apparatus according to claim 6, characterized in that the measuring signal which expresses the ratio between two colour components is supplied to the combination circuit (29 to 32) by way of two separate signal paths, of which one contains the memory device (28).

**8.** An apparatus according to claim 7, characterized in that the combination circuit (29 to 32) is a signal adder which has an operational amplifier with different amplification factors for the individual signals to be added.

**9.** An apparatus according to claim 8, characterized in that the amplification factor is adjustable for at least one of the signals to be added.

**Revendications**

**1.** Procédé pour la détermination de filtres lors du tirage en couleur dans un appareil d'agrandissement ou de tirage photographique avec une installation de filtres pour le filtrage chromatique de la lumière de tirage, l'intensité de lumière de tirage émanant des filtres colorés et d'un original d'image à copier étant mesurée sélectivement dans les couleurs fondamentales, rouge, vert et bleu, et le filtrage étant réglé en fonction d'un écart existant par rapport à un original de référence, caractérisé en ce que l'original est éclairé dans une première phase de mesure par de la lumière non filtrée de la source de lumière de tirage et les valeurs de mesure déterminées sont enregistrées ; en ce que dans une seconde phase de mesure, pendant laquelle des filtres colorés sont déplacés vers leur position active, les signaux de mesure courants sont diminués séparément par couleur d'une fraction prédéterminée des valeurs correspondantes enregistrées auparavant et le filtre coloré correspondant est ajusté jusqu'à ce que le signal de mesure diminué prenne une valeur de référence déterminée par rapport à l'original de référence et au filtrage adapté à celui-ci.

**2.** Procédé selon la revendication 1, caractérisé en ce que des signaux de mesure diminués sont formés en relation avec les rapports des différentes parts de couleurs entre elles.

**3.** Procédé selon la revendication 2, caractérisé en ce que des signaux de mesure diminués sont formés en relation avec les rapports bleu/rouge et vert/rouge des parts de couleurs dans la lumière de mesure et indiqués de manière visible par des dispositifs indicateurs séparés.

**4.** Procédé selon la revendication 3, caractérisé en ce que les signaux de mesure diminués sont indiqués dans les dispositifs indicateurs sous la forme d'un écart des valeurs de mesure correspondantes par rapport à une condition d'étalonnage.

**5.** Dispositif de mesure pour la réalisation du procédé selon les revendications 1 à 4, comprenant plusieurs convertisseurs photo-électriques (13,14,15), dont chacun est sensibilisé à l'une des couleurs fondamentales, rouge, vert et bleu, caractérisé en ce qu'il comporte un dispositif d'enregistrement (28) pour l'enregistrement de valeurs de mesure selon les conditions de mesure dans la première phase de mesure, un circuit de combinaison (29 à 32) pour la combinaison des valeurs de mesures enregistrées avec le signal de mesure correspondant aux conditions de mesures dans l'autre phase de mesure pour la formation d'un signal de mesure diminué d'une fraction prédéterminée des valeurs enregistrées et un dispositif indicateur (35,36,37) pour l'indication visible du signal de mesure diminué.

6. Dispositif selon la revendication 5, caractérisé en ce qu'il présente deux canaux de mesure séparés pour la détermination du rapport des parts de deux couleurs fondamentales avec la part de la troisième couleur fondamentale et en ce que chaque canal de mesure comprend un dispositif d'enregistrement (28), un circuit de combinaison (29 à 32) et un dispositif indicateur (35,36,37) pour le signal de mesure diminué.

7. Dispositif selon la revendication 6, caractérisé en ce que le signal de mesure qui exprime le rapport entre deux parts de couleurs est amené au circuit de combinaison (29 à 32) par deux trajets de signal séparés, dont l'un contient le dispositif d'enregistrement (28).

8. Dispositif selon la revendication 7, caractérisé en ce que le circuit de combinaison (29 à 32) est un additionneur de signaux, qui présente un amplificateur opérationnel avec des facteurs d'amplification différents pour les différents signaux à additionner.

9. Dispositif selon la revendication 8, caractérisé en ce que le facteur d'amplification peut être réglé pour au moins l'un des signaux à additionner.

Fig. 1

Fig. 2